# FASCICULE DE BREVET EUROPEEN

(11) **EP 0 596 761 B1**
(45) Date de publication et mention de la délivrance du brevet: **13.12.1995**
(21) Numéro de dépôt: 93402433.2
(22) Date de dépôt: 05.10.1993
(51) Int. Cl.: F16D 66/02

(54) **Patin de frein à disque muni d'un témoin d'usure sonore**
Belagträgerplatte einer Scheibenbremse mit einem schallerzeugenden Verschleissfühler
Brake pad carrier of a disc brake with noise generating wear indicator

(30) Priorité: 04.11.1992 FR 9213168
(43) Date de publication de la demande: 11.05.1994
(73) Titulaire: ALLIEDSIGNAL MATERIAUX DE FRICTION, 93585 Saint Ouen (FR)
(72) Inventeur: Le Bris, Jean-Pierre, F-95100 Argenteuil (FR)
(74) Mandataire: Bentz, Jean-Paul

(56) Documents cités:
- DE-A- 2 800 501
- GB-A- 2 093 541

## Description

La présente invention concerne un patin de frein à disque doté d'un témoin d'usure sonore essentiellement formé par un ressort en lamelle replié sur lui-même pour constituer un oscillateur présentant deux branches disposées côte à côte et dont l'une est libre et l'autre liée, la branche libre étant de longueur supérieure à celle de la branche liée et pouvant venir en contact avec le disque pour subir de ce dernier une excitation oscillatoire grâce à laquelle le ressort vibre à la manière d'un diapason.

Des témoins de ce type sont bien connus dans l'art antérieur, par exemple illustre par les documents GB-A-2 093 541 et DE-A1-2 800 501.

Une difficulté essentielle dans la conception, la réalisation et le montage de ces témoins d'usure réside dans l'obligation de concilier une multitude de contraintes contradictoires, notamment l'efficacité de production sonore du témoin et la nécessité d'éviter toute interférence entre la fonction de ce témoin et la fonction première du frein auquel il est associé, en particulier tout endommagement du disque de freinage.

Par exemple, les documents antérieurs cités décrivent tous deux des témoins d'usure sonore dont la branche liée est montée sur le patin par pression suivant une direction parallèle à celle selon laquelle la branche libre est sollicitée en vibration par le disque.

Or, un tel montage s'est avéré ne présenter qu'une efficacité réduite pour ce qui concerne la production sonore.

Par ailleurs, selon le document DE-A1-2 800 501, le témoin d'usure fait aussi fonction de ressort de recul pour le patin. Pour ce faire, il se trouve logé dans un espace réduit et sollicité par les forces variables appliquées au patin, de sorte qu'il ne peut présenter qu'un fonctionnement aléatoire et qu'il risque d'endommager le disque.

La présente invention se situe dans ce contexte et a pour but de proposer un patin de frien doté d'un témoin d'usure sonore conçu pour résoudre les compromis précédemment évoqués.

A cette fin, le patin de frein de l'invention est essentiellement caractérisé en ce que le ressort en lame dont le témoin d'usure principalement constitué est topologiquement équivalent, par développement, à une surface plane en forme de manivelle composée de trois bandes contiguës dont la seconde relie la première à la troisième et se trouve sensiblement disposée à angle droit par rapport à chacune d'elles, cette seconde bande présentant un pli transversal la séparant en deux parties et formant un premier dièdre, la première bande étant repliée sur elle-même et sur la première partie de la seconde bande, pour constituer avec cette première partie ledit oscillateur, la branche libre de ce dernier étant tournée vers l'intérieur du premier dièdre, et la troisième bande étant dotée de deux moyens de fixation et formant, avec la seconde partie de la seconde bande, un pli par lequel cette troisième bande se tourne vers l'extérieur dudit premier dièdre.

Cette disposition permet à la fois de monter le témoin dans une zone où les risques d'interférence avec la fonction de freinage sont nuls, et d'autre part de permettre à l'oscillateur à diapason de subir, par excitation vibratoire, des déformations selon deux plis non parallèles l'un à l'autre, et d'éviter tout déplacement de la branche liée par rapport au patin, ce qui augmente considérablement l'efficacité sonore du témoin et permet d'éviter l'usure du disque.

Par ailleurs, pour un patin comprenant une plaque support sensiblement symétrique par rapport à un plan médian, dont une première face plane est revêtue d'un matériau de friction, dont la seconde face est destinée à recevoir une force d'application, et dont l'épaisseur présente, de chaque côté du plan médian, une zone d'appui et une zone libre formant entre elles un second dièdre, le témoin d'usure sonore est appliqué sur la seconde face de la plaque support en alignant le premier dièdre formé par le pli transversal de la seconde bande du témoin d'usure sonore sur le second dièdre formé par la zone d'appui et la zone libre d'un côté de la plaque support, la branche libre de ce témoin étant fixée sur la seconde face de la plaque support, placée en regard de la zone libre et traversant le plan de la première face de la plaque support.

D'autres caractéristiques et avantages de l'invention ressortiront clairement de la description qui en est faite ci-après, à titre indicatif et nullement limitatif, en référence aux dessins annexés, sur lesquels :
- la Figure 1 est une vue en perspective du témoin d'usure sonore utilisable dans l'invention ;
- la Figure 2 représente la forme développée de ce témoin ;
- la Figure 3 représente en perspective un patin de frein à disque conforme à l'invention, équipé d'un témoin d'usure sonore adoptant une configuration inverse de celle représentée à la Figure 1.

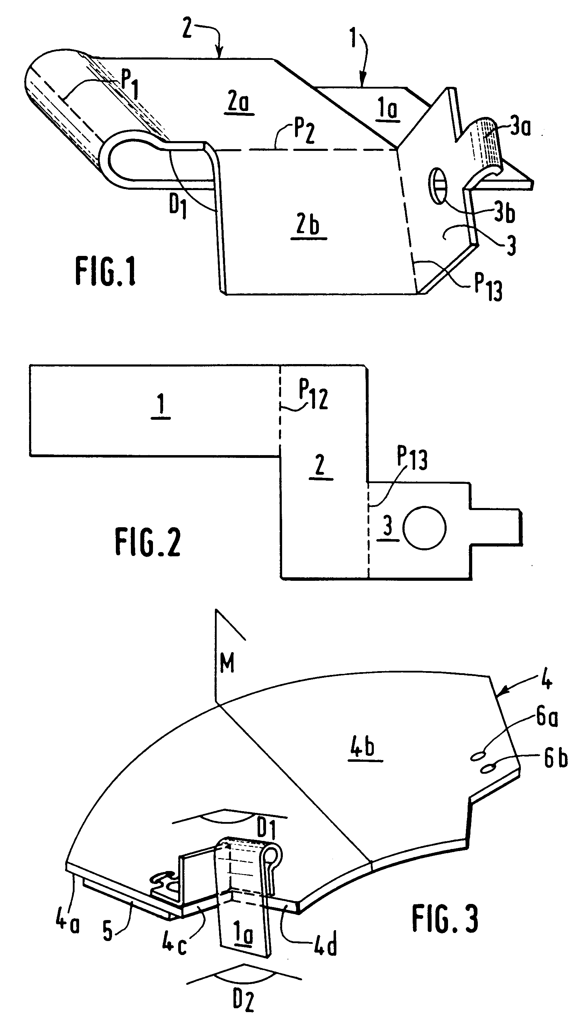

Le témoin utilisé dans l'invention (Figure 1) est essentiellement formé par un ressort en lamelle, par exemple réalisé en acier trempé, et topologiquement équivalent, par développement, à la surface plane en forme de manivelle représentée à la Figure 2.

Cette surface comprend trois bandes contiguës 1, 2, 3, par exemple rectangulaires, et virtuellement distinguées les unes des autres par les pointillés P12 et P13 de la Figure 2.

La seconde bande 2 relie la première bande 1 à la troisième bande 3 et se trouve sensiblement disposée à angle droit par rapport à chacune d'elles.

Par ailleurs, cette seconde bande 2 présente un pli transversal P2 (Figure 1) qui la sépare en deux parties 2a et 2b et qui forme un premier dièdre saillant D1.

La première bande 1 est repliée sur elle-même et sur la première partie 2a de la seconde bande 2, autour des pointillés P1 de la Figure 1, vers l'intérieur du premier dièdre D1.

La partie 2a de la seconde bande 2 et la première bande 1 repliée forment ainsi un oscillateur acoustique assimilable à un diapason, dont une branche, formée par l'extrémité la de la bande 1, est libre, tandis que l'autre, au moins partiellement formée par la première partie 2a de la seconde bande 2, est liée, la branche libre étant plus longue que la branche liée.

La troisième bande 3 forme avec la seconde partie 2b de la seconde bande 2 un pli, par exemple confondu avec les pointillés P13, et par lequel cette troisième bande se tourne vers l'extérieur du premier dièdre D1.

Cette troisième bande présente très préférablement deux moyens de fixation, par exemple une patte terminale 3a, recourbée en sens inverse du pli P13, et un orifice 3b permettant l'insertion d'un rivet ou d'un boulon.

Selon le sens du pli P2, qui conditionne à la fois le sens du pli P1 puisque la branche libre la se trouve à l'intérieur du premier dièdre D1, et le sens du pli P13 puisque la troisième bande est tournée vers l'extérieur de ce dièdre, il est possible d'obtenir deux configurations différentes, droite et gauche, du témoin d'usure sonore, respectivement illustrées aux Figures 1 et 3.

Comme le montre la Figure 3, ce témoin d'usure peut équiper un patin de frein à disque comprenant une plaque support 4 sensiblement symétrique par rapport à un plan médian M et dont une première face plane 4a (non visible) est revêtue d'un matériau de friction 5 destiné à venir au contact d'un disque de freinage par application d'une force sur l'autre face 4b de cette plaque support.

La plaque 4 présente sur son épaisseur, de chaque côté du plan médian M, une zone d'appui 4c et une zone libre 4d, formant entre elles un second dièdre D2.

La plaque 4 présente par ailleurs des points d'ancrage tels que 6a, 6b, destinés à coopérer avec les moyens de fixation 3a, 3b du témoin d'usure.

Ce dernier, comme le montre la Figure 3, est monté sur la seconde face 4b de la plaque 4, de manière que les premier et second dièdres D1 et D2 soient alignés, et que la branche libre la soit placée en regard de la zone libre 4d, sa longueur lui permettant de traverser le plan de la première face 4a de la plaque 4 pour venir frotter sur le disque dès que l'épaisseur du matériau de friction 5, par usure de ce dernier, atteint une valeur basse de sécurité.

La fixation du témoin d'usure est par exemple obtenue par insertion de la patte recourbée 3a dans un orifice ancrage tel que 6a, et insertion d'un rivet à travers les orifices de fixation et d'ancrage tels que 3b et 6b.

## Revendications

1. Patin de frein à disque doté d'un témoin d'usure sonore essentiellement formé par un ressort en lamelle replié sur lui-même pour constituer un oscillateur présentant deux branches disposées côte à côte et dont l'une est libre et l'autre liée, la branche libre étant de longueur supérieure à celle de la branche liée et pouvant venir en contact avec le disque pour subir de ce dernier une excitation oscillatoire grâce à laquelle le ressort vibre à la manière d'un diapason, caractérisé en ce que ce ressort est topologiquement équivalent, par développement, à une surface plane en forme de manivelle composée de trois bandes contiguës dont la seconde (2) relie la première (1) à la troisième (3) et se trouve sensiblement disposée à angle droit par rapport à chacune d'elles, cette seconde bande présentant un pli transversal (P2) la séparant en deux parties (2a, 2b) et formant un premier dièdre (D1), la première bande (1) étant repliée sur elle-même et sur la première partie (2a) de la seconde bande, pour constituer avec cette première partie ledit oscillateur, la branche libre (1a) de ce dernier étant tournée vers l'intérieur du premier dièdre (D1), et la troisième bande (3) étant dotée de deux moyens de fixation (3a, 3b) et formant, avec la seconde partie (2b) de la seconde bande, un pli (P13) par lequel cette troisième bande se tourne vers l'extérieur dudit premier dièdre (D1).

2. Patin de frein à disque selon la revendication 1, comprenant une plaque support (4) sensiblement symétrique par rapport à un plan médian (M), dont une première face plane (4a) est revêtue d'un matériau de friction, dont la seconde face (4b) est destinée à recevoir une force d'application, et dont l'épaisseur présente, de chaque côté du plan médian, une zone d'appui (4c) et une zone libre (4d) formant entre elles un second dièdre (D2), caractérisé en ce que le dit témoin d'usure sonore est appliqué sur la seconde face (4b) de la plaque support, en ce que le premier dièdre (D1) formé par le pli transversal de la seconde bande du témoin d'usure sonore est aligné sur le second dièdre (D2) formé par la zone d'appui et la zone libre d'un côté de la plaque support, en ce que la branche libre (1a) de ce témoin est placée en regard de la zone libre (4d) et traverse le plan de la première face (4a) de la plaque support, et en ce que la troisième bande (3) de ce témoin est fixée, par ses deux points de fixation (3a, 3b), sur la seconde face de la plaque support.

## Claims

1. Disk brake pad fitted with an audible wear indicator essentially formed by a leaf spring folded on itself to constitute an oscillator having two branches, which are arranged side by side, one of which is free and the other of which is fixed, the free branch being longer than the fixed branch and being capable of coming into contact with the disk in order to be subjected by the latter to oscillatory excitation, by virtue of which the spring vibrates in the manner of a tuning fork, characterized in that this spring is topologically equivalent, by development, to a flat crank-shaped surface composed of three contiguous strips, of which the second (2) connects the first (1) to the third (3) and is arranged substantially at a right angle with respect to each of them, this second strip having a transverse fold (P2) separating it into two parts (2a, 2b) and forming a first dihedron (D1), the first strip (1) being folded onto itself and onto the first part (2a) of the second strip, in order to make up with this first part said oscillator, the free branch (1a) of the latter being turned towards the inside of the first dihedron (D1), and the third strip (3) being fitted with two fastening means (3a, 3b) and forming, with the second part (2b) of the second strip, a fold (P13) by which this third strip is turned towards the outside of said first dihedron (D1).

2. Disk brake pad according to claim 1, comprising a support plate (4) substantially symmetrical with respect to a median plane (M), of which a first flat face (4a) is coated with a frictional material, of which the second face (4b) is intended to receive an application force, and of which the thickness has, on either side of the median plane, a bearing zone (4c) and a free zone (4d) forming between them a second dihedron (D2), characterized in that said audible wear indicator is applied onto the second face (4b) of the support plate, in that the first dihedron (D1) formed by the transverse fold of the second strip of the audible wear indicator is aligned with the second dihedron (D2) formed by the bearing zone and the free zone on one side of the support plate, in that the free branch (1a) of this indicator is placed opposite the free zone (4d) and passes through the plane of the first face (4a) of the support plate, and in that the third strip (3) of this indicator is fastened, by its two fastening points (3a, 3b), onto the second face of the support plate.

## Patentansprüche

1. Bremsbelag für eine Scheibenbremse, versehen mit einer akustischen Verschleißanzeige, die im wesentlichen gebildet ist durch eine Blattfeder, die auf sich selbst zurückgebogen ist, um eine Schwingungsvorrichtung zu bilden, welche zwei Seite an Seite angeordnete Schenkel aufweist, von denen der eine frei und der andere gebunden ist, wobei der freie Schenkel eine größere Länge aufweist als der gebundene Schenkel und mit der Scheibe in Berührung treten kann, um von dieser eine Schwingungserregung zu erfahren, aufgrund welcher die Feder nach Art einer Stimmgabel schwingt, dadurch gekennzeichnet, daß die Feder im abgewickelten Zustand eine ebene Fläche mit der Form einer Kurbel ist, die aus drei aneinandergrenzenden Streifen besteht, von denen der zweite (2) den ersten (1) mit dem dritten (3) verbindet und sich im wesentlichen in einem rechten Winkel zu diesen angeordnet befindet, wobei der zweite Streifen einen Querfalz (P2) aufweist, der diesen Streifen in zwei Abschnitte (2a, 2b) unterteilt und ein erstes Dieder (D1) bildet, wobei der erste Streifen (1) auf sich selbst und auf dem ersten Abschnitt (2a) des zweiten Streifens zurückgebogen ist, um mit diesem ersten Abschnitt die Schwingungsvorrichtung zu bilden, wobei der freie Schenkel (1a) der Schwingungsvorrichtung zum Innenraum des ersten Dieders (D1) gerichtet ist und wobei der dritte Streifen (3) mit zwei Befestigungsmitteln (3a, 3b) versehen ist und mit dem zweiten Abschnitt (2b) des zweiten Streifens einen Falz (P13) bildet, durch den der dritte Streifen zum Innenraum des ersten Dieders (D1) gerichtet ist.

2. Bremsbelag für eine Scheibenbremse nach Anspruch 1, mit einer zu einer Mittelebene (M) im wesentlichen symmetrischen Trägerplatte (4), von der eine erste flache Seite (4a) mit einem Reibmaterial beschichtet ist, deren zweite Seite (4b) dafür vorgesehen ist, eine Anpreßkraft aufzunehmen, und deren Dicke auf jeder Seite der Mittelebene eine Abstützzone (4c) und eine freie Zone (4d) aufweist, welche zwischen sich ein zweites Dieder (D2) bilden, dadurch gekennzeichnet, daß die akustische Verschleißanzeige an der zweiten Seite (4b) der Trägerplatte angebracht ist, daß das erste Dieder (D1), welches von dem Querfalz des zweiten Streifens der akustischen Verschleißanzeige gebildet ist, auf das zweite Dieder (D2) ausgerichtet ist, welches von der Abstützzone und der freien Zone einer Seite der Trägerplatte gebildet ist, daß der freie Schenkel (1a) dieser Verschleißanzeige gegenüber der freien Zone (4d) angeordnet ist und die Ebene der ersten Seite (4a) der Trägerplatte durchquert, und daS der dritte Streifen (3) dieser Verschleißanzeige mittels seiner beiden Befestigungsstellen (3a, 3b) an der zweiten Seite der Trägerplatte befestigt ist.
